# FASCICULE DE BREVET EUROPEEN

(11) **EP 2 595 793 B1**
(45) Date de publication et mention de la délivrance du brevet: **19.03.2014**
(21) Numéro de dépôt: 11730686.0
(22) Date de dépôt: 12.07.2011
(51) Int. Cl.: B29C 49/46, B29C 49/58

(54) **DISPOSITIF D'INJECTION D'AU MOINS DEUX FLUIDES SOUS PRESSION DANS LE COL D'UN RÉCIPIENT POUR LE FORMAGE DUDIT RÉCIPIENT**
VORRICHTUNG ZUR EINSPRITZUNG VON MINDESTENS ZWEI UNTER DRUCK STEHENDEN FLÜSSIGKEITEN IN DEN HALS EINES BEHÄLTERS ZUR FORMUNG DES BEHÄLTERS
DEVICE FOR INJECTING AT LEAST TWO PRESSURIZED FLUIDS INTO THE NECK OF A CONTAINER IN ORDER TO FORM SAID CONTAINER

(30) Priorité: 20.07.2010 FR 1055883
(43) Date de publication de la demande: 29.05.2013
(73) Titulaire: Sidel Participations, 76930 Octeville sur Mer (FR)
(72) Inventeur: FEVRE, Sébastien, F-76930 Octeville-sur-Mer (FR); FEUILLOLEY, Guy, F-76930 Octeville-sur-Mer (FR)
(74) Mandataire: Gevers France
(86) Numéro de dépôt international: PCT/EP2011/061831
(87) Numéro de publication internationale: WO 2012/010461

(56) Documents cités:
- WO-A1-01/19594
- DE-A1-102004 014 653
- FR-A1- 2 917 004

## Description

L'invention concerne un dispositif d'injection d'au moins deux fluides sous pression dans le col d'une préforme.

L'invention concerne plus particulièrement un dispositif d'injection d'au moins deux fluides sous pression dans le col d'orientation axiale d'un récipient à l'état d'ébauche pour le formage d'un récipient final en déformant ledit récipient par injection successive d'un premier fluide sous pression, puis d'un deuxième fluide sous pression, le dispositif comportant :
- une première conduite d'alimentation d'un premier fluide sous pression ;
- une deuxième conduite d'alimentation d'un deuxième fluide sous pression.

La fabrication de récipients en matière thermoplastique, tels que des bouteilles, flacons, etc. est effectuée par le formage de récipients à l'état d'ébauche, qui sont parfois appelés préformes.

Préalablement à la mise en oeuvre du procédé de formage, les récipients à l'état d'ébauche sont chauffés dans un four de conditionnement thermique de manière à leur conférer une structure suffisamment malléable pour le procédé de formage.

Ces récipients à l'état d'ébauche sont ensuite introduits dans une unité de moulage auquel sont généralement associés des moyens de soufflage ou d'étirage-soufflage.

A l'issu du procédé de formage, une étape de remplissage est mise en oeuvre. Au cours de cette étape de remplissage, le récipient à l'état final est généralement rempli d'un liquide qui est destiné à être commercialisé ou transporté dans le récipient final.

Dispositifs pour la fabrication de récipients en matière thermoplastique à partir des préformes sont connus par example du document DE 102004014653 A1 ou du document WO 01/19594 A1.

Le document EP-A-2.143.544 a proposé de modifier le procédé de formage en utilisant un liquide pour finaliser la mise en forme du récipient. Le procédé selon cet état de la technique comporte ainsi une première étape d'expansion partielle du récipient depuis son état d'ébauche jusqu'à un état intermédiaire par soufflage d'un gaz de soufflage à basse pression, puis une deuxième étape de remplissage du récipient dans ledit état intermédiaire avec un liquide de remplissage, et enfin, une troisième étape de prise d'empreinte au cours de laquelle le liquide contenu dans le récipient est mis sous une haute pression afin de conférer sa forme finale au récipient.

Le liquide de remplissage est généralement incompressible par rapport à un gaz. Ceci permet donc une montée en pression efficace et rapide.

Avantageusement, le liquide utilisé lors de la troisième étape de prise d'empreinte est le liquide qui est destiné à être transporté dans le récipient à l'état final. Un tel procédé permet ainsi de remplir le récipient avec le liquide pendant le procédé de formage. Ceci permet notamment de gagner du temps en évitant de rajouter une opération de remplissage après le procédé de formage.

La présente invention a pour but de fournir un dispositif d'injection du gaz de soufflage et du liquide de remplissage plus rapide et plus performant, de manière à produire des récipients finaux de meilleure qualité.

A cet effet, l'invention propose un dispositif d'injection du type décrit précédemment, avec les caractéristiques décrites dans la revendication 1.

Selon d'autres caractéristiques de l'invention :
- la première conduite d'alimentation débouche dans une cloche qui entoure le col de la préforme de manière étanche ;
- le joint est susceptible d'être interposé radialement dans le premier jeu radial entre la buse et la paroi interne du col ;
- le joint présente une forme annulaire et il est agencé extérieurement autour de la buse, le joint étant déformable élastiquement entre un état rétracté dans lequel le premier fluide est susceptible de passer vers l'intérieur du récipient par un deuxième jeu radial réservé entre le joint et la paroi interne du col, et un état expansé dans lequel le joint est plaqué radialement contre la paroi interne du col du récipient pour obturer de manière étanche le premier jeu radial ;
- l'expansion du joint est commandée par le coulissement axial relatif d'un coin annulaire conique d'axe axial par rapport au joint ;
- le joint annulaire est monté coulissant axialement par rapport à la buse entre une position supérieure de retrait dans laquelle le joint est agencé verticalement au-dessus du col, et une position inférieure d'insertion dans le premier jeu radial à l'intérieur du col dans laquelle le joint est interposé radialement entre la buse et le col ;
- le coin conique est porté par la paroi externe de la buse qui est montée coulissante axialement par rapport au joint de manière à commander le joint dans son état expansé lorsque le joint occupe sa position inférieure d'insertion ;
- le coin est formé venu de matière avec la buse ;
- le coulissement de la buse est commandé par un piston mobile axial dans un cylindre ;
- le premier fluide est constitué d'un gaz compressible de soufflage tel que de l'air comprimé ;
- Suivant l'invention le deuxième fluide est constitué d'un liquide incompressible de remplissage ;
- le dispositif est monté coulissant axialement entre une position haute d'attente dans laquelle il est agencé à distance au-dessus du col du récipient, et une position basse d'injection dans laquelle le dispositif est susceptible d'injecter le premier fluide sous pression et/ou le deuxième fluide sous pression.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en coupe axiale qui représente le dispositif d'injection qui est agencé dans une position haute d'attente au-dessus du col d'un récipient qui est agencé dans un moule, le récipient étant à l'état d'ébauche ;
- la figure 2 est une vue similaire à celle de la figure 1 dans laquelle le dispositif d'injection occupe une position basse d'injection, le joint du mécanisme d'étanchéité est dans une position supérieure de retrait ;
- la figure 3 est une vue similaire à celle de la figure 1 dans laquelle le joint du mécanisme d'étanchéité est dans une position inférieure d'insertion et dans un état rétracté ;
- la figure 4 est une vue similaire à celle de la figure 3 dans laquelle un joint d'étanchéité est dans un état expansé pour obturer un orifice d'alimentation en gaz de soufflage.

Pour la suite de la description, on adoptera à titre non limitatif une orientation verticale dirigée de bas en haut indiquée par la flèche "V" des figures, et une orientation radiale dirigée orthogonalement depuis l'axe "A" du récipient vers l'extérieur.

Pour la suite de la description, des éléments présentant des fonctions analogues, identiques ou similaires seront désignés par des mêmes numéros de référence.

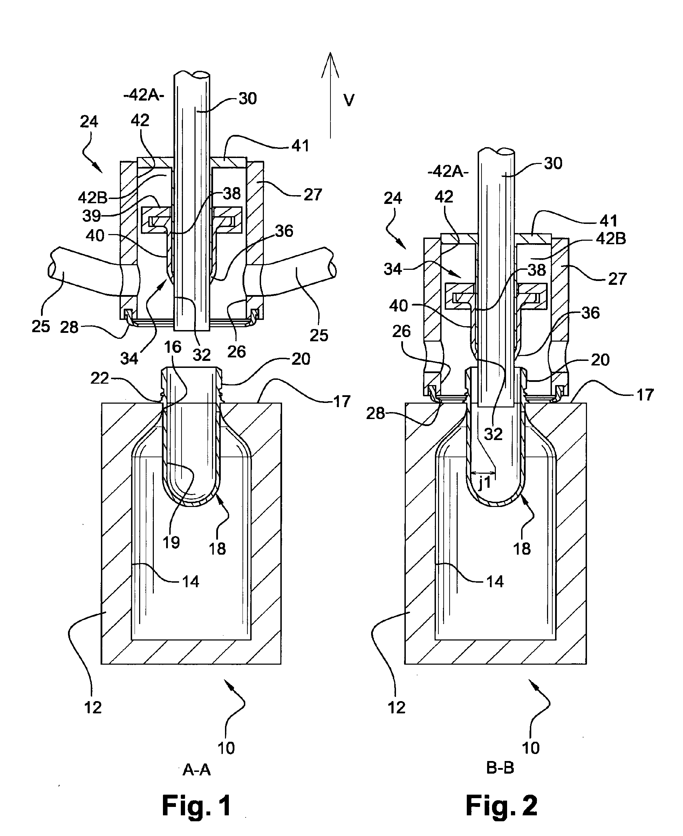

On a représenté à la figure 1 une unité 10 de moulage qui est apte à mettre en oeuvre un procédé de formage comportant au moins :
- une première étape de soufflage d'un premier fluide sous pression, qui est ici un gaz de soufflage compressible tel que de l'air, puis
- une deuxième étape de remplissage avec un deuxième fluide sous pression, qui est ici un liquide incompressible de remplissage, tel que de l'eau, qui est destiné à être conditionné dans le récipient.

L'unité 10 de moulage comporte un moule 12 qui est généralement réalisé en plusieurs parties qui peuvent être séparées pour introduire et/ou extraire le récipient avant et après son formage.

Par la suite, lorsqu'on fera référence au moule 12 sans autre précision, on comprendra que le moule 12 est dans sa position assemblée.

Le moule 12 est ici réalisé en deux parties séparables radialement l'une de l'autre. Chaque partie comporte une demi-empreinte concave du récipient final à obtenir (fonds parois, épaule). Ainsi, lorsque les deux parties sont assemblées pour former le moule 12, les deux demi-empreintes forment une cavité 14 délimitée par une empreinte de la forme finale du récipient à l'état final.

En variante, les moules comportent trois parties : une partie avec l'empreinte du fond de récipient et deux parties pour constituer les parois et l'épaule du récipient.

La cavité 14 est ouverte verticalement vers le haut par l'intermédiaire d'un orifice 16 supérieur formé dans une face 17 supérieure horizontale du moule 12.

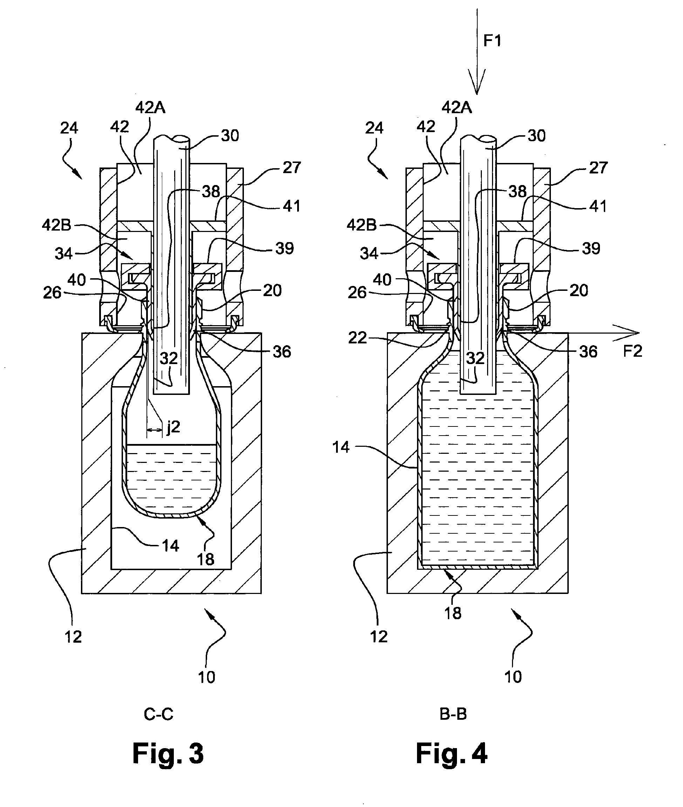

Le moule 12 est destiné à loger un récipient 18 en matériau thermoplastique. Un tel récipient 18 à l'état d'ébauche est généralement appelé préforme. Le récipient 18 à l'état d'ébauche est préalablement conditionné thermiquement afin de rendre le matériau thermoplastique suffisamment malléable pour que le récipient 18 puisse être soufflé, ou mis en expansion, pour former un récipient final présentant la même forme que la cavité 14, comme représenté à la figure 4.

Le récipient 18 comporte généralement un corps 19 creux qui est ouvert vers le haut par l'intermédiaire d'un orifice délimité radialement par un col 20 d'axe vertical "A", encore appelé goulot.

De manière connue, le col 20 du récipient 18 présente généralement déjà sa forme définitive lorsque le récipient 18 est à l'état d'ébauche. Les dimensions du col 20 ne doivent donc pas être modifiées lors du procédé de formage. A cet effet, seul le corps 19 du récipient 18 à l'état d'ébauche est logé dans la cavité 14 du moule 12, le col 20 s'étendant à l'extérieur de la cavité 14 en sortant par l'orifice supérieur 16 pour éviter toute déformation fortuite.

Aux figures 1 et 2, le récipient 18 a été représenté à l'état d'ébauche. A la figure 3, le récipient 18 est représenté dans un état intermédiaire. A la figure 4, le récipient 18 est représenté dans son état final. On comprendra que durant le formage de ce récipient 18 en récipient final, le col 20 conservera sa forme initiale.

Le corps 19 du récipient 18 est séparé du col 20 par l'intermédiaire d'une collerette 22 qui s'étend radialement en saillie vers l'extérieur. La collerette 22 retient ici le col 20 à l'extérieur de la cavité 14 du moule 12 en reposant sur la face 17 supérieure du moule 12.

L'unité 10 de moulage comporte un dispositif 24 d'injection d'au moins deux fluides sous pression dans le col 20 d'orientation axiale d'un récipient 18 pour le formage d'un récipient fini en déformant ledit récipient 18 à l'état d'ébauche par injection successive d'un premier fluide sous pression, puis d'un deuxième fluide sous pression.

Aux figures, le dispositif 24 d'injection représenté présente globalement une symétrie de révolution par rapport à l'axe "A" du col 20.

Comme expliqué précédemment, le premier fluide est constitué d'un gaz de soufflage tel que de l'air comprimé à 10 bars, tandis que le deuxième fluide est constitué d'un liquide incompressible, tel que de l'eau, susceptible d'être comprimé par exemple à une pression de 40 bars.

Le dispositif 24 est susceptible d'être commandé entre :
- une position haute d'attente, telle que représentée à la figure 1, dans laquelle il est agencé à distance au-dessus de la face 17 supérieure du moule 12 afin de permettre l'introduction d'un récipient 18 à l'état d'ébauche ou l'extraction d'un récipient final ;
- une position basse d'injection, telle que représentée aux figures 2 à 4, dans laquelle le dispositif 24 est susceptible d'injecter le gaz de soufflage sous pression et/ou le liquide de remplissage sous pression.

Le dispositif 24 comporte au moins une première conduite 25 d'alimentation qui est reliée à une source (non représentée) commandée d'air comprimé. La première conduite 25 d'alimentation débouche dans une cloche 26 qui est susceptible de recouvrir le col 20 de manière étanche lorsque la tuyère 24 est dans sa position basse d'injection.

La cloche 26 est formée dans un carter 27 du dispositif 24.

Le bord d'extrémité inférieur de la cloche 26 est équipé d'un joint 28 d'étanchéité qui est destiné à être serré verticalement vers le bas contre la face 17 supérieure du moule 12 ou contre la collerette 22 du col 20. Dans l'exemple représenté aux figures, il s'agit d'un joint 28 à lèvre qui est destiné à être plaqué contre la face 17 supérieure du moule 12 par la pression de l'air comprimé qui est susceptible d'alimenter la cloche 26.

Le dispositif 24 comporte en outre une deuxième conduite 30 d'alimentation qui est raccordée à une source (non représentée) commandée de liquide de remplissage sous pression. La partie de la deuxième conduite 30 d'alimentation qui est formée dans le carter 27 présente une orientation d'axe "A" vertical. L'extrémité inférieure de la deuxième conduite 30 d'alimentation débouche dans une buse 32 d'injection d'axe vertical coaxial à l'axe "A" du col 20 du récipient 18.

La buse 32 présente une forme tubulaire cylindrique débouchant vers le bas.

La buse 32 est destinée à être agencée concentriquement à l'intérieur du col 20 lorsque le dispositif 24 occupe sa position basse d'injection. La buse 32 présente un diamètre extérieur tel que dans cette position basse, il subsiste un premier jeu "j1" radial annulaire qui entoure la buse 32 et qui s'étend radialement entre la face cylindrique externe de la buse 32 et la face cylindrique interne du col 20. Ce premier jeu "j1" radial fait communiquer l'intérieur du récipient 18 avec la cloche 26. Ainsi l'injection et l'échappement du gaz de soufflage dans le récipient 18 est réalisé à travers ce premier jeu "j1" radial.

Le dispositif 24 d'injection comporte aussi un mécanisme 34 commandé d'étanchéité qui est susceptible d'être commandé entre une position ouverte dans laquelle le gaz de soufflage est susceptible de passer par le premier jeu "j1" radial pour pénétrer ou sortir du récipient 18, et une position fermée dans laquelle un joint 36 d'étanchéité obture de manière étanche le premier jeu "j1" radial entre la buse 32 et le col 20 du récipient 18.

Ce mécanisme 34 commandé d'étanchéité est notamment utilisé pour permettre la montée en pression du liquide de remplissage contenu dans le récipient 18 à une haute pression supérieure à celle du gaz de soufflage, par exemple 40 bars, sans faire fuir ledit liquide de remplissage vers la cloche 26 à travers le premier jeu "j1" radial. Ceci permet notamment de conserver l'extérieur du col 20 au sec pour faciliter la fixation du bouchon sur le récipient 18 final contenant le liquide de remplissage.

Le joint 36 annulaire est agencé extérieurement autour de la buse 32. Le joint 36 d'étanchéité est déformable élastiquement entre un état rétracté, tel que représenté aux figures 2 et 3, correspondant à la position ouverte du mécanisme 34 d'étanchéité, et un état expansé, tel que représenté à la figure 4, dans lequel le joint 36 annulaire est plaqué radialement contre la paroi interne du col 20 du récipient 18 pour obturer de manière étanche le premier jeu "j1" radial, et qui correspond à la position fermée du mécanisme 34 d'étanchéité.

Dans son état expansé, le joint 36 exerce un effort radial vers l'extérieur contre la paroi interne du col 20. Cet effort radial est représenté par la flèche "F2" de la figure 4. Pour préserver l'intégrité du col 20, il est avantageux d'agencer le joint 36 d'étanchéité au niveau de la collerette 22 du col 20. La collerette 22 forme en effet une nervure qui renforce la rigidité du col 20 à ce niveau, en évitant ainsi des déformations plastiques éventuelles dues à l'expansion du joint 36.

Dans l'exemple représenté aux figures, le joint 36 annulaire est avantageusement monté coulissant axialement par rapport à la buse 32 entre :
- une position supérieure de retrait, comme illustré à la figure 2, dans laquelle le joint 36 est agencé verticalement au-dessus du col 20 lorsque le dispositif 24 est dans sa position inférieure d'injection, de manière à ne pas faire ne pas diminuer la section de passage du gaz de soufflage à travers le premier jeu "j1", que ce soit dans le sens de l'injection dans le récipient 18 ou dans le sens de l'échappement vers la cloche 26 ;
- une position inférieure d'insertion dans le premier jeu "j1" radial à l'intérieur du col 20, comme illustrée aux figures 3 et 4, dans laquelle le joint 36 est interposé radialement entre la buse 32 et le col 20.

Ainsi, lorsque le joint 36 occupe sa position supérieure de retrait, le débit de gaz de soufflage à travers le premier jeu "j1" radial n'est pas limité par la présence du joint 36.

Le joint 36 est par exemple descendu vers sa position inférieure d'insertion lorsque le récipient 18 est rempli presque rempli, par exemple à 80% afin d'assurer que le premier jeu "j1" radial soit obturé de manière étanche lorsque le récipient 18 sera rempli de liquide.

Lorsque le joint 36 occupe sa position inférieure d'insertion dans son état rétracté, le premier jeu "j1" radial est réduit à un deuxième jeu "j2" radial annulaire qui subsiste autour du joint 36 entre le joint 36 et la face cylindrique interne du col 20 de manière à permettre au gaz de soufflage de finir de s'échapper.

Le deuxième jeu "j2" radial est bien entendu inférieur au premier jeu "j1" radial. Dans cette configuration, le débit du gaz de soufflage est limité par la présence du joint 36 mais l'échappement du gaz de soufflage est toujours possible. Ainsi, même dans la position inférieure d'insertion du joint 36, le mécanisme 24 d'étanchéité est dans une position ouverte.

En outre, le fait de pouvoir commander le coulissement vertical du joint 36 dans son état rétracté permet d'éviter que le joint 36 ne touche le col 20 durant son déplacement. Ainsi ni le col 20 ni le joint 36 ne sont susceptibles d'être endommagés.

Le joint 36 est formé dans un matériau élastomère élastiquement déformable. Le joint 36 annulaire est ici formé par l'extrémité inférieure libre d'un manchon 40 axial qui est agencé extérieurement autour de la buse 32. Le manchon 40 est monté fixe dans un anneau 39 coulissant verticalement autour de la buse 32. Le coulissement vertical vers le bas du joint 36 est limité par butée verticale de l'anneau 39 contre le bord d'extrémité supérieure du col 20.

L'expansion du joint 36 annulaire est commandée par le coulissement axial d'un coin 38 conique d'axe axial par rapport au joint 36 annulaire. Le coin 38 présente une forme annulaire de diamètre extérieur sensiblement égal au diamètre interne du manchon 40. Le coin 38 est porté de manière fixe par une paroi cylindrique externe de la buse 32.

Le coin 38 est ici réalisé venu de matière avec la buse 32.

La buse 32 est montée coulissante dans le carter 27 pour permettre le coulissement du coin 38.

En outre, le coulissement vertical du joint 36 entre ses deux positions est réalisé par le coulissement vertical de la buse 32.

En prenant comme référence la position basse d'injection du dispositif 24, la buse 32 est ainsi montée coulissante verticalement dans le carter 27 entre:
- une position extrême supérieure, comme illustrée aux figures 1 et 2, dans laquelle l'extrémité inférieure de la buse 32 est agencé dans le col 20, et dans laquelle le joint 36 est dans son état rétracté ;
- une position intermédiaire d'insertion du joint 36, comme représentée à la figure 3, dans laquelle le joint 36 est entraîné par la buse 32 vers sa position inférieure d'insertion ; et
- une position extrême inférieure d'obturation, comme représentée à la figure 4, dans laquelle le joint 36 est commandé vers son état expansé par le coin 38.

Dans sa position extrême inférieure d'obturation, l'extrémité inférieure de la buse 32 est agencée à proximité du col 20 de manière à être plus proche du col 20 que du fond du récipient 18.

La face interne du joint 36 annulaire présente une rampe inclinée vers l'axe "A" en se déplaçant de haut en bas selon la flèche "F1" de la figure 4. La face externe du coin 38 présente une rampe similaire à celle du joint 36. Ainsi, le joint 36 est commandé entre ses deux états par le coulissement du coin 38 :
- depuis une position haute de repos, qui correspond à la position intermédiaire de la buse 32, et dans laquelle il est agencé au-dessus du joint 36 d'étanchéité,
- vers une position basse d'expansion, qui correspond à la position extrême inférieure de la buse 32, et dans laquelle le joint 36 est expansé par contact entre lesdites rampes.

Selon une variante non représentée de l'invention, c'est le joint annulaire qui est monté coulissant verticalement par rapport au coin fixe.

Le coin 38 est commandé en coulissement par un piston 41 qui est agencé à l'extrémité supérieure de la buse 32.

Selon d'autres variantes de l'invention, on comprendra que le coin peut être mue par d'autres moyens, tels que des moyens électriques, mécaniques ou magnétiques.

La buse 32 est agencée concentriquement à l'intérieure du manchon 40.

La buse 32 s'étend vers le haut à l'intérieure de la conduite 30 jusqu'au piston 41 à distance au-dessus de l'anneau 39. En outre, la buse 32 est débouchante axialement vers le haut de manière à permettre le passage du liquide de remplissage.

Le piston 41 est monté coulissant verticalement dans un cylindre 42 formé dans le carter 27. Le piston 41 divise ainsi de manière étanche le cylindre 42 en une chambre 42A supérieure et en une chambre 42B inférieure. Chaque chambre 42A, 42B étanche comporte uniquement un orifice (non représenté) d'alimentation associé.

Le piston 41, la buse 32 et le coin 38 forment ainsi un ensemble solidaire en coulissement entre une position haute de repos et une position basse d'expansion.

Pour permettre le coulissement conjoint de la buse 32 et du joint 36, un ressort de compression (non représenté) est par exemple interposé verticalement entre le piston 41 et l'anneau 39. Ainsi, lorsque l'anneau 39 est en butée contre le col 20, le coulissement vers le bas du piston 41 entraîne la buse 32 vers sa position extrême inférieure en comprimant le ressort.

En variante, l'anneau est en butée à proximité du col, contre un élément de butée de la cloche.

Chacun des orifices est raccordé à une source commandée de fluide sous pression, qui est ici formée par la même source que le gaz de soufflage. Chaque orifice est équipé de vannes (non représentées) d'alimentation en fluide sous pression. Les vannes sont susceptibles d'être commandées pour faire varier la pression dans chacune des chambres 42A, 42B.

On décrit à présent le fonctionnement du dispositif 24 d'injection muni du mécanisme 34 commandé d'étanchéité.

Lorsque le dispositif 24 d'injection est dans sa position haute d'attente, représentée à la figure 1, un récipient 18 est introduit dans le moule 12. Puis, le dispositif 24 d'injection est commandé vers sa position basse d'injection, représentée à la figure 2, dans laquelle la cloche 26 recouvre de manière étanche le col 20, et dans laquelle la buse 32 est insérée à l'intérieur du col 20.

La buse 32 est alors dans sa position extrême supérieure. Le piston 41 occupe alors sa position haute de repos. A cet effet, la chambre 42B inférieure est maintenue à une pression supérieure à celle de la chambre 42A supérieure. Le joint 36 d'étanchéité est dans sa position supérieure de retrait , laissant ainsi le premier jeu "j1" radial ouvert pour le passage du gaz de soufflage provenant de la cloche 26 avec un débit optimal.

Le piston 41 demeure dans cette position haute de repos durant le remplissage du récipient 18 avec le liquide de remplissage. Ainsi, le gaz de soufflage contenu dans le récipient 18 est susceptible de s'échapper vers la cloche 26 en passant par le premier jeu "j1" radial au fur et à mesure que monte le niveau de liquide de remplissage.

Lorsque le récipient 18 est rempli d'un pourcentage de volume déterminé, par exemple 80%, la buse 32 est commandée par le piston 41 vers sa position intermédiaire d'insertion du joint 36 dans le col 20, représentée à la figure 3. Il subsiste alors le deuxième jeu "j2" radial pour permettre au gaz de soufflage résiduel de s'échapper.

Selon une variante non représentée de l'invention, la buse est commandée vers sa position intermédiaire beaucoup plus tôt, par exemple dés le début du remplissage avec le liquide de remplissage.

Lorsqu'il est nécessaire de pressuriser le récipient 18 rempli de liquide de remplissage à haute pression, par exemple 40 bars, le piston 41 est commandé vers sa position extrême basse, comme représenté à la figure 4. Pour ce faire, les vannes sont commandées de manière que la pression dans la chambre 42A supérieure soit supérieure à celle de la chambre 42B inférieure.

Le coin 38 exerce alors un effort d'expansion radial vers l'extérieur sur le joint 36 d'étanchéité. Le joint 36 d'étanchéité est alors déformé vers sa position expansée dans laquelle le deuxième jeu "j2" radial est totalement obturé.

La haute pression dans le récipient 18 exerce alors un effort radial vers l'extérieur directement sur le manchon 40 pour compléter l'action du coin 38.

Le dispositif 24 d'injection réalisé selon les enseignements de l'invention permet ainsi d'injecter deux fluides différents dans un même récipient 18, le deuxième fluide passant par une buse 32 centrale, tandis que le premier fluide passe par un premier jeu "j1" radial réservé entre la buse 32 central et le col 20 du récipient 18.

En outre, le mécanisme 34 commandé d'étanchéité permet d'obturer aisément et totalement le premier jeu "j1" radial afin de faire monter la pression du deuxième fluide sans risque de fuite.

## Revendications

1. Dispositif (24) d'injection d'au moins deux fluides sous pression dans le col (20) d'orientation axiale d'un récipient (18) à l'état d'ébauche pour le formage d'un récipient final en déformant ledit récipient (18) par injection successive d'un premier fluide sous pression, puis d'un deuxième fluide sous pression, le dispositif (24) comportant :
- une première conduite (25) d'alimentation d'un premier fluide sous pression ;
- une deuxième conduite (30) d'alimentation d'un deuxième fluide sous pression, la deuxième conduite (30) d'alimentation débouchant dans une buse (32) axiale qui est destinée à être agencée concentriquement à l'intérieur du col (20) avec un premier jeu (j1) radial de manière à permettre le passage du premier fluide sous pression entre le récipient (18) et la première conduite (25) d'alimentation à travers le premier jeu (j1) radial ;
le deuxième fluide sous pression utilisé pour le formage du récipient (18) étant constitué d'un liquide incompressible de remplissage,
**caractérisé en ce qu'**il comporte un mécanisme (34) d'étanchéité qui est susceptible d'être commandé entre une position ouverte dans laquelle le premier fluide est susceptible de passer à travers le premier jeu (j1) radial, et une position fermée dans laquelle un joint (36) d'étanchéité obture de manière étanche le premier jeu (j1) radial entre la buse (32) et le col (20) du récipient (18).

2. Dispositif (24) selon la revendication précédente, **caractérisé en ce que** la première conduite (25) d'alimentation débouche dans une cloche (26) qui entoure le col (20) de la préforme de manière étanche.

3. Dispositif (24) selon l'une quelconque des revendications 1 ou 2, **caractérisé en ce que** le joint (36) est susceptible d'être interposé radialement dans le premier jeu (j1) radial entre la buse (32) et la paroi interne du col (20).

4. Dispositif (24) selon la revendication précédente, **caractérisé en ce que** le joint (36) présente une forme annulaire et il est agencé extérieurement autour de la buse (32), le joint (36) étant déformable élastiquement entre un état rétracté dans lequel le premier fluide est susceptible de passer vers l'intérieur du récipient (18) par un deuxième jeu (j2) radial réservé entre le joint (36) et la paroi interne du col (20), et un état expansé dans lequel le joint (36) est plaqué radialement contre la paroi interne du col (20) du récipient (18) pour obturer de manière étanche le premier jeu (j1) radial.

5. Dispositif (24) selon la revendication précédente, **caractérisé en ce que** l'expansion du joint (36) est commandée par le coulissement axial relatif d'un coin (38) annulaire conique d'axe axial par rapport au joint (36).

6. Dispositif (24) selon la revendication précédente, **caractérisé en ce que** le joint (36) annulaire est monté coulissant axialement par rapport à la buse (32) entre :
- une position supérieure de retrait dans laquelle le joint (36) est agencé verticalement au-dessus du col (20) ; et
- une position inférieure d'insertion dans le premier jeu (j1) radial à l'intérieur du col (20) dans laquelle le joint (36) est interposé radialement entre la buse (32) et le col (20).

7. Dispositif (24) selon la revendication précédente, **caractérisé en ce que** le coin (38) conique est porté par la paroi externe de la buse (32) qui est montée coulissante axialement par rapport au joint (36) de manière à commander le joint (36) dans son état expansé lorsque le joint (36) occupe sa position inférieure d'insertion.

8. Dispositif (24) selon la revendication précédente, **caractérisé en ce que** le coin (38) est formé venu de matière avec la buse (32).

9. Dispositif (24) selon la revendication précédente, **caractérisé en ce que** le coulissement de la buse (32) est commandé par un piston (41) mobile axial dans un cylindre (42).

10. Dispositif (24) selon l'une quelconque des revendications précédentes, **caractérisé en ce que** le premier fluide est constitué d'un gaz compressible de soufflage tel que de l'air comprimé.

11. Dispositif (24) selon l'une quelconque des revendications précédentes, **caractérisé en ce que** le dispositif (24) est monté coulissant axialement entre :
- une position haute d'attente dans laquelle il est agencé à distance au-dessus du col (20) du récipient (18) ;
- une position basse d'injection dans laquelle le dispositif (24) est susceptible d'injecter le premier fluide sous pression et/ou le deuxième fluide sous pression.

## Patentansprüche

1. Vorrichtung (24) zum Einleiten von wenigstens zwei Fluiden unter Druck in den Hals (20) mit axialer Orientierung eines Aufnahmebehälters (18) im Rohzustand für die Formung eines endgültigen Aufnahmebehälters durch Verformen des Aufnahmebehälters (18) durch aufeinander folgendes Einleiten eines ersten Fluids unter Druck und dann eines zweiten Fluids unter Druck, wobei die Vorrichtung (24) Folgendes umfasst:
- eine erste Leitung (25) für die Versorgung mit einem ersten Fluid unter Druck;
- eine zweite Leitung (30) für die Versorgung mit einem zweiten Fluid unter Druck, wobei die zweite Versorgungsleitung (30) in eine axiale Düse (32) mündet, die dazu bestimmt ist, in dem Hals (20) konzentrisch mit einem ersten radialen Spiel (j1) in der Weise angeordnet zu werden, dass der Durchgang des ersten Fluids unter Druck zwischen dem Aufnahmebehälter (18) und der ersten Versorgungsleitung (25) durch das erste radiale Spiel (j1) ermöglicht wird;
wobei das zweite Fluid unter Druck, das für die Formung des Aufnahmebehälters (18) verwendet wird, aus einer nicht komprimierbaren Befüllungsflüssigkeit gebildet ist,
**dadurch gekennzeichnet, dass** sie einen Abdichtungsmechanismus (34) umfasst, der zwischen einer geöffneten Position, in der sich das erste Fluid durch das erste radiale Spiel (j1) bewegen kann, und einer geschlossenen Position, in der eine Dichtung (36) das erste radiale Spiel (j1) zwischen der Düse (32) und dem Hals (20) des Aufnahmebehälters (18) dicht verschließt, gesteuert werden kann.

2. Vorrichtung (24) nach dem vorhergehenden Anspruch, **dadurch gekennzeichnet, dass** die erste Versorgungsleitung (25) in eine Glocke (26) mündet, die den Hals (20) des Vorformlings dicht umgibt.

3. Vorrichtung (24) nach einem der Ansprüche 1 oder 2, **dadurch gekennzeichnet, dass** die Dichtung (36) radial in das erste radiale Spiel (j1) zwischen der Düse (32) und der Innenwand des Halses (20) eingefügt werden kann.

4. Vorrichtung (24) nach dem vorhergehenden Anspruch, **dadurch gekennzeichnet, dass** die Dichtung (36) eine Ringform aufweist und außen um die Düse (32) angeordnet ist, wobei die Dichtung (36) zwischen einem zurückgezogenen Zustand, in dem sich das erste Fluid in dem Aufnahmebehälter (18) durch ein zweites radiales Spiel (j2) bewegen kann, das zwischen der Dichtung (36) und der Innenwand des Halses (20) reserviert ist, und einem ausgedehnten Zustand, in dem die Dichtung (36) radial an der Innenwand des Halses (20) des Behälters (18) anliegt, um das erste radiale Spiel (j1) dicht zu verschließen, elastisch verformt werden kann.

5. Vorrichtung (24) nach dem vorhergehenden Anspruch, **dadurch gekennzeichnet, dass** die Ausdehnung der Dichtung (36) durch das relative axiale Gleiten eines konischen ringförmigen Keils (38) mit axialer Achse in Bezug auf die Dichtung (36) gesteuert wird.

6. Vorrichtung (24) nach dem vorhergehenden Anspruch, **dadurch gekennzeichnet, dass** die ringförmige Dichtung (36) axial gleitend in Bezug auf die Düse (32) montiert ist zwischen:
- einer oberen zurückgezogenen Position, in der die Dichtung (36) vertikal über dem Hals (20) angeordnet ist; und
- einer unteren Position zum Einsetzen in das erste radiale Spiel (j1) in dem Hals (20), in dem die Dichtung (36) zwischen der Düse (32) und dem Hals (20) radial eingefügt ist.

7. Vorrichtung (24) nach dem vorhergehenden Anspruch, **dadurch gekennzeichnet, dass** der konische Keil (38) von der äußeren Wand der Düse (32) getragen wird, die axial gleitend in Bezug auf die Dichtung (36) montiert ist, derart, dass die Dichtung (36) in ihren ausgedehnten Zustand gesteuert wird, wenn die Dichtung (36) ihre untere Einsetzposition einnimmt.

8. Vorrichtung (24) nach dem vorhergehenden Anspruch, **dadurch gekennzeichnet, dass** der Keil (38) einteilig mit der Düse (32) gebildet ist.

9. Vorrichtung (24) nach dem vorhergehenden Anspruch, **dadurch gekennzeichnet, dass** das Gleiten der Düse (32) durch einen in einem Zylinder (42) axial beweglichen Kolben (41) gesteuert wird.

10. Vorrichtung (24) nach einem der vorhergehenden Ansprüche, **dadurch gekennzeichnet, dass** das erste Fluid aus einem komprimierbaren Blasgas wie etwa Druckluft gebildet ist.

11. Vorrichtung (24) nach einem der vorhergehenden Ansprüche, **dadurch gekennzeichnet, dass** die Vorrichtung (24) axial gleitend montiert ist zwischen:
- einer oberen Warteposition, in der sie in einem Abstand über dem Hals (20) des Aufnahmebehälters (18) angeordnet ist;
- einer unteren Einleitungsposition, in der die Vorrichtung (24) das erste Fluid unter Druck und/oder das zweite Fluid unter Druck einleiten kann.

## Claims

1. A device (24) for injecting at least two pressurized fluids into the axially oriented neck (20) of a container (18) in the parison state for forming a final container by deforming said container (18) by the successive injection of a first pressurized fluid then of a second pressurized fluid, the device (24) comprising:
- a first supply pipe (25) supplying a first pressurized fluid;
- a second supply pipe (30) supplying a second pressurized fluid, the second supply pipe (30) opening into an axial nozzle (32) which is intended to be arranged concentrically inside the neck (20) with a first radial gap (j1) so as to allow the first pressurized fluid to pass between the container (18) and the first supply pipe (25) through the first radial gap (j1);
the second pressurized fluid used for forming the container (18) consisting of an incompressible filling liquid,
**characterized in that** it comprises a sealing mechanism (34) that can be made to switch between an open position in which the first fluid is able to pass through the first radial gap (j1), and a closed position in which a seal (36) plugs the first radial gap (j1) between the nozzle (32) and the neck (20) of the container (18) in a fluidtight manner.

2. The device (24) as claimed in the preceding claim, **characterized in that** the first supply pipe (25) opens into a bell (26) surrounding the neck (20) of the preform in a fluidtight manner.

3. The device (24) as claimed in either one of claims 1 and 2, **characterized in that** the seal (36) can be interposed radially in the first radial gap (j1) between the nozzle (32) and the internal wall of the neck (20).

4. The device (24) as claimed in the preceding claim, **characterized in that** the seal (36) is of annular shape and is arranged externally around the nozzle (32), the seal (36) being elastically deformable between a contracted state in which the first fluid can pass toward the inside of the container (18) via a second radial space (j2) left between the seal (36) and the internal wall of the neck (20), and an expanded state in which the seal (36) is radially pressed firmly against the internal wall of the neck (20) of the container (18) in order to plug the first radial space (j1) in a fluidtight manner.

5. The device (24) as claimed in the preceding claim, **characterized in that** the expansion of the seal (36) is brought about by the relative axial sliding of a conical annular wedge (38) of axial axis with respect to the seal (36).

6. The device (24) as claimed in the preceding claim, **characterized in that** the annular seal (36) is mounted to slide axially with respect to the nozzle (32) between:
- a raised retracted position in which the seal (36) is arranged vertically above the neck (20); and
- a lowered position of insertion in the first radial gap (j1) into the neck (20), in which position the seal (36) is interposed radially between the nozzle (32) and the neck (20).

7. The device (24) as claimed in the preceding claim, **characterized in that** the conical wedge (38) is carried by the external wall of the nozzle (32) which is mounted to slide axially with respect to the seal (36) so as to cause the seal (36) to switch into its expanded state when the seal (36) is in its lowered position of insertion.

8. The device (24) as claimed in the preceding claim, **characterized in that** the wedge (38) is formed as an integral part of the nozzle (32).

9. The device (24) as claimed in the preceding claim, **characterized in that** the sliding of the nozzle (32) is brought about by a piston (41) able to move axially in a cylinder (42).

10. The device (24) as claimed in any one of the preceding claims, **characterized in that** the first fluid consists of a compressible blow-molding gas such as compressed air.

11. The device (24) as claimed in any one of the preceding claims, **characterized in that** the device (24) is mounted to slide axially between:
- an upper standby position in which it is arranged some distance above the neck (20) of the container (18);
- a lowered injection position in which the device (24) is able to inject the first pressurized fluid and/or the second pressurized fluid.
